# EUROPÄISCHE PATENTSCHRIFT

(11) **EP 1 697 477 B1**
(45) Veröffentlichungstag und Bekanntmachung des Hinweises auf die Patenterteilung: **16.11.2011**
(21) Anmeldenummer: 04803942.4
(22) Anmeldetag: 16.12.2004
(51) Int. Cl.: C09J 7/00

(54) **DICHTUNGSBAND ZUR KLEBUNG VON DAMPFSPERREN- UND DAMPFBREMSFOLIEN SOWIE VERFAHREN ZUR HERSTELLUNG**
SEALING STRIP FOR ADHERING VAPOUR-BINDING AND VAPOUR-SEALING FILMS, AND METHOD FOR THE PRODUCTION THEREOF
BANDE D'ETANCHEITE POUR COLLER DES FEUILLES PARE-VAPEUR, AINSI QUE PROCEDES POUR SA PRODUCTION

(30) Priorität: 23.12.2003 DE 10361475
(43) Veröffentlichungstag der Anmeldung: 06.09.2006
(73) Patentinhaber: Lohmann GmbH & Co. KG, 56567 Neuwied (DE)
(72) Erfinder: BLUM, Walter, 56567 Neuwied (DE); WESTER, Dirk, 57537 Selbach (DE); WIEGMANN, Volker, 65232 Taunusstein (DE)
(74) Vertreter: Flaccus, Rolf-Dieter
(86) Internationale Anmeldenummer: PCT/EP2004/014329
(87) Internationale Veröffentlichungsnummer: WO 2005/063906

(56) Entgegenhaltungen:
- EP-A- 0 604 709
- EP-A- 1 262 532
- WO-A-2004/108851
- DE-A1- 10 063 018
- GB-A- 1 357 586
- COWIE J.M.G.: "Chemie und Physik der synthetischen Polymeren", 1997, FRIEDR. VIEWEG & SOHN VERLAGSGESELLSCHAFT MBH, BRAUNSCHWEIG/WIESBADEN
- "Triblock-Copolymere RD-20-02704", RÖMPP ONLINE, [Online] March 2002 (2002-03), Retrieved from the Internet: URL:http://www.roempp.com/prod/index1.html > [retrieved on 2008-08-20]
- HANS-GEORG ELIAS: "Makromoleküle, Band 1, Grundlagen", 1990, HÜTHIG & WEPF VERLAG, BASEL HEIDELBERG NEW YORK * page 848 - page 850 *

## Beschreibung

Die vorliegende Erfindung betrifft ein selbstklebendes, flexibles Dichtungsband auf Basis eines flexiblen, selbstklebende Kerns, der mit einem zweiten Klebstoffsystem ummantelt oder beschichtet ist, insbesondere zur Klebung von Dampfsperren- und Dampfbremsfolien, sowie Verfahren zu seiner Herstellung.

Eine normale Baufeuchte lässt sich nicht umgehen, aber eine permanente Durchfeuchtung von Bauteilen in oder an Bauwerken sollte auf jeden Fall vermieden werden, da dies häufig zu Schäden führt.

Die Feuchtigkeit kann von außen in Bauwerke oder Bauteile eindringen, zumeist wenn ein Bauteil kaputt, verstopft, gerissen oder unvollständig ist. So kann beispielsweise eine Fassade in kurzer Zeit durchfeuchten, wenn eine Regenrinne verstopft oder undicht, Dachziegel kaputt oder verrutscht, Anschlüsse von Schornstein oder Dachfenstern defekt, Risse im Außenputz vorhanden oder Abdichtungen fehlerhaft sind oder gar ganz fehlen.

Häufig entstehen feuchte Stellen an Bauteilen aber auch durch das Kondensieren von Feuchtigkeit an kalten Stellen. Der kondensierte Wasserdampf wird als "Tauwasser" bezeichnet. Unter bestimmten klimatischen Bedingunger kann sich die Feuchtigkeit der Raumluft im Wand-, Decken- und Bodenbereich auf den Oberflächen, oder im Inneren von Bauteilen als Tauwasser niederschlagen. Die Folge sind durchfeuchtete Bauteile, insbesondere Dämm-Material, eine verminderte Wärmedämmung, Schimmelbildung und schließlich weitergehende Bauschäden.

Zur Vermeidung von Tauwasser genügt manchmal eine Änderung der Heiz- und Lüftungsgewohnheiten in den betroffenen Räumen, damit keine weiteren Schäden entstehen. In manchen Schadensfällen sind jedoch umfangreiche sanierungsmaßnahmen erforderlich, um zukünftigen Tauwasserausfall zu vermeiden.

Zum Schutz des Mauerwerks und der Dämmstoffe wird beim Neubau oder bei Sanierungsmaßnahmen eine Dampfsperre oder Dampfbremse eingebaut, die verhindert, dass sich beispielsweise hinter einer Innendämmung Tauwasser sammelt. Die Feuchtigkeit der Raumluft kann dann das Damm-Material nicht mehr erreichen. Bei einer Dachdämmung erhöht die Dampfsperre oder Dampfbremse gleichzeitig die Winddichtigkeit.

Dampfsperren und Dampfbremsen bestehen üblicherweise aus Folien wie zum Beispiel PVC-Foliea, PE-Folien (Polyethylen) oder Aluminiumfolien. Es kommt aber auch Dachpappe zum Einsatz. Daneben eignen sich aber auch Putze, Pappen, Holz sowie Gipskarton- oder Holzwerkstoffplatten zur Erstellung einer dauerhaften und voll durchgehenden luftdichten Schicht.

Bei Verwendung von Dampfsperrenfolien und Dampfbremsfolien müssen diese dauerhaft dicht auf Untergründe wie Beton, Mauerwerk, Putz, sägerauem Holz und dergleichen geklebt werden, damit sie ihre Dichtfunktion auf Dauer verfüllen können. Ein besonderes Problem stellen diesbezüglich Mauerwerksfugen dar.

Die Klebung der Dampfsperrenfolie oder Dampfbremsfolie sollte dauerelastisch sein, um Gebäudebewegungen ausgleichen zu können. Ferner wird eine Alterungsbeständigkeit der Klebung gefordert, und der Markt wünscht auch Lösemittelfreiheit, Umweltverträglichkeit und Soforthaftung des Klebers.

Bislang wurden Dampfsperrenfolien und Dampfbremsfolien mittels eines Kartuschenklebers auf Dispersionsbasis verklebt. Insbesondere war die Wandanschlussbefestigung einer Dampfsperrfolie bisher nicht anderweitig als mit Kartuschenklebern zu lösen. Diese Kartuschenkleber sind zwar lösemittelfrei, bauen jedoch, je nach Umgebungsbedingungen, erst nach über 20 Minuten, teilweise bis zu 24 Stunden benötigend, eine stabile Haftung auf. Darüber hinaus unterliegen diese Kartuschenkleber weiterhin der Gefahr, sich bei späterer Feuchtigkeitsbeaufschlagung abzubauen.

EP 1 262 532 A1 beschreibt ein Dichtband zur Befestigung von Dichtmaterialien aus Gummi in Automobilen bestehend aus einem wärmeaktivierbaren Polymer aus olefinischen Klebharzmonomeren als Trägermaterial, dessen eine Seite Coronavorbehandelt und mit einer Acryl-Haftkleberschicht versehen ist.

Aufgabe der vorliegenden Erfindung war es daher, ein Klebersystem bereitzustellen, welches lösemittelfrei, umweltverträglich, sofort haftend, flexibel, dauerhaft elastisch und alterungsbeständig ist.

Die Aufgabe wird erfindungsgemäß durch ein Dampfsperrendichtband gelöst, bei dem ein flexibler, selbstklebender Kern oder eine flexible, selbstklebende Trägerschicht mit einer Ummantelung oder beidseitigen Beschichtung aus einem zweiten Klebstoffsystem versehen ist wobei die Ummantelung/Beschichtung aus einem expandierten Haftklebeband besteht und das Material für den Kern/die Trägerschicht aus der Gruppe ausgewählt ist, die aus thermoplastischen Kautschuken, welche aus Styrol-Isopren-Styrol-Blockcopolymeren oder Styrol-Butadien-Styrol-Blockcopolymere basieren, Copolymeren des Vinylacetats und Polyisobutylene besteht. Der Aufbau des erfindungsgemäßen Dampfsperrendichtbands ermöglicht zum einen eine dauerhafte Klebung von Dampfsperrfolien oder Dampfbremsfolien und hat zum anderen aufgrund des flexiblen Kerns die Eigenschaft, Unebenheiten der Oberfläche, z. B. Mörtelfugen oder raue Oberflächen, auszugleichen und abzudichten. Darüber hinaus stellt der klebende Kern des Dampfsperrendichtbandes sicher, dass das System bei Verletzung der Ummantelung bzw. Beschichtung weiterhin klebend und dicht bleibt.

Das Kernmaterial weist auch bei Temperaturen von unter +5°C eine ausreichende Flexibilität auf. Als Kernmaterial können verschiedene flexible und klebende Materialien eingesetzt werden.

Die Dicke des Kerns/der Trägerschicht liegt vorzugsweise zwischen 0,1 und 8 mm, besonders bevorzugt zwischen 1 mm und 5 mm. Die Breite des Kerns/der Trägerschicht liegt vorzugsweise zwischen 1 mm und 10 mm.

Eine Aufdoppelung oder Faltung des Kern-/Trägerschichtmaterials, um größere Dicken zu erreichen, ist möglich. Auch die Anzahl der Kerne/Trägerschichten pro Dampfsperrendichtband ist variabel.

Der Kern/die Trägerschicht muss keine bestimmte Form aufweisen. Er kann im Querschnitt rund, oval, rechteckig oder quadratisch sein, aber auch eine beliebige andere Form haben.

Aufgrund seiner Formulierung ist der Klebstoff des Kerns/ der Trägerschicht auch bei niedrigen Temperaturen, z.B. im Bereich um -5°C, dauerhaft anschmiegsam.

Das expandierte Haftklebeband wird vorzugsweise auf Basis eines Dispersionsreinacrylats hergestellt.

Das Dispersionsreinacrylat basiert vorzugsweise auf weichmachenden Monomeren wie 2-Ethylhexylacrylat, 1-Butylacrylat oder n-Butylacrylat. Sofern die Ummantelung/Abdeckung nicht aus einem Kleber auf Basis eines Dispersionsreinacrylats besteht, werden Klebstoffe auf Basis von Vinylisobutylether oder Isobuten bevorzugt.

Durch die Expansion des Haftklebstoffs wird eine höherer Masseantrag realisiert, der eine optimale Benetzung der jeweiligen Oberfläche ermöglicht, was zu einer optimalen Abdichtung der Dampfsperren-/Dampfbremsfolie führt. Dies ist im Besonderen bei der Abdichtung über Mauerwerksfugen hinweg von Vorteil. Dabei weist die Ummantelung/Beschichtung vorzugsweise eine schaumartige Struktur auf, die gewährleistet, dass sich das erfindungsgemäße Dampfsperrendichtband besser an die Oberflächenstruktur des Untergrunds anpassen kann. Darüber hinaus kompensiert die Ummantelung/Beschichtung den für Heißschmelzkleber typischen Rückstelleffekt.

Die Dicke der Ummantelung/Beschichtung liegt vorzugsweise zwischen 0,2 mm und 1,5 mm, besonders bevorzugt zwischen 0,5 mm und 1 mm.

In einer besonderen Ausführungsform ist das erfindungsgemäße Dampfsperrendichtband mit verstärkenden Elementen ausgerüstet, die das Dampfsperrendichtband insbesondere in Längsrichtung stabilisieren. Als verstärkende Elemente können Fäden, Gelege, Gewebe oder Gewirke verwendet werden.

Für die Herstellung des erfindungsgemäßen Dampfsperrendichtbandes werden zunächst der Kern bzw die Trägerschicht und das expandierte Haftklebeband in eigenständigen Herstellungsprozessen als bahnförmige Materialien hergestellt.

Zur Herstellung des expandierten Haftklebebandes wird eine wässrige Dispersion des Haftklebstoffs hergestellt, die einen Füllstoff aus thermoplastischen, mit Kohlenwasserstoffgas gefüllten Kunststoffhohlkügelchen enthält, welche bei Einwirkung einer Temperatur im Bereich zwischen 70°C und 140°C expandieren. Diese Dispersion wird zu einem Klebeband verarbeitet, welches expandiert wird.

Zur Herstellung des Dichtungsbandes an sich lässt man dann zwei vorkonfektionierte, expandierte Haftklebebänder, je eines pro Seite, zu einer Bahn aus dem elastischen Kern-/Trägerschichtmaterial zulaufen und fügt es mit diesem durch Druck zusammen. Dabei muss der Kern nicht zwingend ummantelt werden, sondern kann auch als Zwischenlage zwischen zwei Bahnen des expandierten Haftklebebandes eingelagert sein.

Das erfindungsgemäße Dichtungsband eignet sich besonders zur Klebung von Dampfsperren- oder Dampfbremsfolien auf Untergründe mit rauen Oberflächen, wie Beton, Mauerwerk, Putz, sägeraues Holz und dergleichen, insbesondere zur Wandanschlussklebung der Dampfsperren- oder Dampfbremsfolien.

## Patentansprüche

1. Selbstklebendes flexibles Dichtungsband, umfassend zumindest einen flexiblen, selbstklebenden Kern oder zumindest eine flexible, selbstklebende Trägerschicht, der/die mit einer Ummantelung oder beidseitigen Beschichtung aus einem zweiten Klebstoffsystem versehen ist, **dadurch gekennzeichnet, dass** die Ummantelung/ Beschichtung aus einem expandierten Haftklebeband besteht und das Material für den Kern/die Trägerschicht aus der Gruppe ausgewählt ist, die aus thermoplastischen Kautschuken, welche auf Styrol-Isopren-Styrol-Blockcopolymeren oder Styrol-Butadien-Styrol-Blockcopolymeren basieren, Copolymeren des Vinylacetats und Polyisobutylenen besteht.

2. Dichtungsband nach Anspruch 1, **dadurch gekennzeichnet, dass** das Haftklebeband auf einem Dispersionsreinacrylat basiert.

3. Dichtungsband nach Anspruch 2, **dadurch gekennzeichnet, dass** das Dispersionsreinacrylat auf weichmachenden Monomeren basiert, die aus der Gruppe ausgewählt sind, die aus 2-Ethylhexylacrylat, 1-Butylacrylat und n-Butylacrylat besteht.

4. Dichtungsband nach Anspruch 1, **dadurch gekennzeichnet, dass** das Haftklebeband aus einem Klebstoff auf Basis von Vinylisobutylether oder Isobuten besteht.

5. Dichtungsband nach einem der vorangehenden Ansprüche, **dadurch gekennzeichnet, dass** die Dicke des Kerns/der Trägerschicht zwischen 0,1 mm und 8 mm liegt.

6. Dichtungsband nach einem der vorangehenden Ansprüche, **dadurch gekennzeichnet, dass** die Breite des Kerns/der Trägerschicht zwischen 1 mm und 10 mm liegt.

7. Dichtungsband nach einem der vorangehenden Ansprüche, **dadurch gekennzeichnet, dass** die Dicke der Ummantelung/Beschichtung zwischen 0,2 und 1,5 mm liegt.

8. Dichtungsband nach einem der vorangehenden Ansprüche, **dadurch gekennzeichnet, dass** die Ummantelung/Beschichtung eine schaumartige Struktur aufweist.

9. Dichtungsband nach einem der vorangehenden Ansprüche, **dadurch gekennzeichnet, dass** das Dichtungsband mit verstärkenden Elementen ausgerüstet ist, die das Dichtungsband in Längsrichtung stabilisieren.

10. Dichtungsband nach Anspruch 9, **dadurch gekennzeichnet, dass** das verstärkende Element aus der Gruppe ausgewählt ist, die aus Fäden, Gelegen, Geweben und Gewirken besteht.

11. Verfahren zur Herstellung eines selbstklebenden, flexiblen Dichtungsbandes, umfassend zumindest einen flexiblen, selbstklebenden Kern oder zumindest eine flexible, selbstklebende Trägerschicht, der/die mit einer Ummantelung oder beidseitigen Beschichtung aus expandiertem Haftklebeband versehen ist, **dadurch gekennzeichnet, dass** Kern/Trägerschicht und Ummantelung/Beschichtungen in eigenständigen Prozessen als bahnförmige Materialien hergestellt werden, und anschließend zwei vorkonfektionierte Haftklebebänder, je eines pro Seite, zu einer Bahn aus dem elastischen Kern-/Trägerschichtmaterial zulaufen und mit diesem durch Druck zusammengefügt werden, wobei zur Herstellung des expandierten Haftklebebandes eine wässrige Dispersion des Haftklebstoffs hergestellt wird, welche einen Füllstoff aus thermoplastischen, mit Kohlenwasserstoffgas gefüllten Kunststoffhohlkügelchen enthält, die bei Einwirkung einer Temperatur im Bereich zwischen 70°C und 140°C expandieren, und die Dispersion zu einem Haftklebeband verarbeitet wird, welches expandiert wird.

12. Verwendung eines Dichtungsbandes nach einem der Ansprüche 1 bis 10, zur Klebung von Dampfsperrenfolien oder Dampfbremsfolien.

## Claims

1. Self-adhesive, flexible sealing tape comprising at least one flexible, self-adhesive core or at least one flexible, self-adhesive carrier layer provided with an envelope or two-sided coating consisting of a second adhesive system, **characterized in that** the envelope/coating consists of an expanded pressure-sensitive adhesive tape, and that the material for the core/the carrier layer is selected from the group consisting of thermoplastic rubbers on the basis of styrene-isoprene-styrene block copolymers or styrene-butadiene-styrene block copolymers, copolymers of vinyl acetate, and polyisobutylenes.

2. Sealing tape according to claim 1, **characterised in that** the pressure-sensitive adhesive tape is based on a pure dispersion acrylate.

3. Sealing tape according to claim 2, **characterised in that** the pure dispersion acrylate is based on plasticizing monomers selected from the group consisting of 2-ethylhexyl acrylate, 1-butyl acrylate and n-butyl acrylate.

4. Sealing tape according to claim 1, **characterised in that** the pressure-sensitive adhesive tape consists of an adhesive based on vinyl isobutyl ether or isobutene.

5. Sealing tape according to any one of the preceding claims, **characterised in that** the thickness of the core/the carrier layer is between 0.1 mm and 8 mm.

6. Sealing tape according to any one of the preceding claims, **characterised in that** the width of the core/the carrier layer is between 1 mm and 10 mm.

7. Sealing tape according to any one of the preceding claims, **characterised in that** the thickness of the envelope/coating is between 0.2 and 1.5 mm.

8. Sealing tape according to any one of the preceding claims, **characterised in that** the envelope/coating has a foam-like structure.

9. Sealing tape according to any one of the preceding claims, **characterised in that** the sealing tape is equipped with reinforcing elements which stabilise the sealing tape in the longitudinal direction.

10. Sealing tape according to claim 9, **characterised in that** the reinforcing element is selected from the group consisting of threads, nonwovens or interlaid scrims, wovens, and knitted or crocheted fabrics.

11. Process for the manufacture of a self-adhesive, flexible sealing tape comprising at least one flexible, self-adhesive core or at least one flexible, self-adhesive carrier layer provided with an envelope or two-sided coating consisting of an expanded pressure-sensitive adhesive tape, **characterised in that** the core/carrier layer and the envelope/coatings are manufactured in independent processes as web-like materials, and that subsequently two pre-fabricated pressure-sensitive adhesive tapes, one per side, are advanced towards a web consisting of the elastic core material/carrier layer material, and are combined therewith by application of pressure.

12. Use of a sealing tape according to any one of claims 1 to 10, for adhesively bonding vapour barrier films or vapour retarder films.

## Revendications

1. Bande d'étanchéité souple autocollante, comprenant au moins un noyau autocollant souple ou au moins une couche de support autocollante souple qui est pourvu/e d'un enrobage ou d'un revêtement sur ses deux côtés, formé d'un second système de matériau adhésif, **caractérisée en ce que** l'enrobage/le revêtement est formé d'une bande auto-adhésive expansée et que la matière pour le noyau/la couche de support est choisie dans le groupe comprenant les caoutchoucs thermoplastiques à base des copolymères séquencés styrène-isoprène-styrène ou de copolymères séquencés styrène-butadiène-styrène, les copolymères de l'acétate de vinyle et les poly-isobutylènes.

2. Bande d'étanchéité selon la revendication 1, **caractérisée en ce que** la bande auto-adhésive est à base d'une dispersion d'acrylate pur.

3. Bande d'étanchéité selon la revendication 2, **caractérisée en ce que** la dispersion d'acrylate pur est à base de monomères plastifiants qui sont choisis dans le groupe comprenant l'acrylate 2-éthylhexyle, l'acrylate de 1-butyle et l'acrylate de n-butyle.

4. Bande d'étanchéité selon la revendication 1, **caractérisée en ce que** la bande auto-adhésive est formée d'un matériau adhésif à base d'éther vinylisobutylique ou d'isobutène.

5. Bande d'étanchéité selon l'une des revendications précédentes, **caractérisée en ce que** l'épaisseur du noyau/de la couche de support est comprise entre 0,1 mm et 8 mm.

6. Bande d'étanchéité selon l'une des revendications précédentes, **caractérisée en ce que** la largeur du noyau/de la couche de support est comprise entre 1 mm et 10 mm.

7. Bande d'étanchéité selon l'une des revendications précédentes, **caractérisée en ce que** l'épaisseur de l'enrobage/du revêtement est comprise entre 0,2 mm et 1,5 mm.

8. Bande d'étanchéité selon l'une des revendications précédentes, **caractérisée en ce que** l'enrobage/le revêtement a une structure semblable à la mousse.

9. Bande d'étanchéité selon l'une des revendications précédentes, **caractérisée en ce que** la bande d'étanchéité est munie d'éléments de renfort qui stabilisent la bande d'étanchéité dans le sens de la longueur.

10. Bande d'étanchéité selon la revendication 9, **caractérisée en ce que** l'élément de renfort est choisi dans le groupe comprenant des fils, des grilles, des tissages et des tissus à mailles.

11. Procédé de fabrication d'une bande d'étanchéité souple autocollante, comprenant au moins un noyau autocollant souple ou au moins une couche de support autocollante souple qui est pourvu/e d'un enrobage ou d'un revêtement sur ses deux côtés, formé d'une bande auto-adhésive expansée, **caractérisé en ce que** le noyau/la couche de support et l'enrobage/les revêtements sont fabriqués sous forme de matériaux en bande dans des procédés indépendants et deux bandes auto-adhésives préconfectionnées, une pour chaque côté, sont dirigées ensuite vers une bande formée du matériau élastique du noyau/de la couche de support à laquelle elles sont unies par application d'une pression, une dispersion aqueuse du matériau auto-adhésif étant fabriquée pour la fabrication de la bande auto-adhésive expansée, laquelle dispersion contient une matière de remplissage consistant en de petites sphères creuses en matière thermoplastique remplies d'un gaz d'hydrocarbure qui se dilatent sous l'effet d'une température comprise entre 70°C et 140°C, et la dispersion est transformée en une bande auto-adhésive qui est expansée.

12. Utilisation d'une bande d'étanchéité selon l'une des revendications 1 à 10 pour coller des feuilles pare-vapeur ou des feuilles anti-vapeur.
